(19) Europäisches Patentamt
European Patent Office
Office européen des brevets

(11) **EP 4 265 654 A1**

(12) **EUROPEAN PATENT APPLICATION**
published in accordance with Art. 153(4) EPC

(43) Date of publication:
**25.10.2023 Bulletin 2023/43**

(21) Application number: **21906997.8**

(22) Date of filing: **10.12.2021**

(51) International Patent Classification (IPC):
***C08F 210/16*** *(2006.01)* ***C08F 216/14*** *(2006.01)*
***C08F 4/6592*** *(2006.01)* ***C08F 4/659*** *(2006.01)*
***C08F 4/02*** *(2006.01)* ***C08F 2/34*** *(2006.01)*

(52) Cooperative Patent Classification (CPC):
**C08F 2/34; C08F 4/02; C08F 4/659; C08F 4/6592; C08F 210/16; C08F 216/14**

(86) International application number:
**PCT/KR2021/018730**

(87) International publication number:
**WO 2022/131693 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2020 KR 20200177033**

(71) Applicant: **Hanwha Solutions Corporation**
**Jung-gu**
**Seoul 04541 (KR)**

(72) Inventors:
- **KIM, Sung Dong**
**Daejeon 34128 (KR)**
- **LEE, Munhee**
**Daejeon 34128 (KR)**
- **JOUNG, Ui Gap**
**Daejeon 34128 (KR)**
- **PARK, Jeong Hyun**
**Daejeon 34128 (KR)**
- **SEO, Junho**
**Daejeon 34128 (KR)**
- **LIM, Seongjae**
**Daejeon 34128 (KR)**
- **JO, Jisong**
**Daejeon 34128 (KR)**
- **PARK, Hye Ran**
**Daejeon 34128 (KR)**

(74) Representative: **Berggren Oy**
**P.O. Box 16**
**Eteläinen Rautatiekatu 10A**
**00101 Helsinki (FI)**

# (54) OLEFIN-BASED POLYMER AND PREPARATION METHOD THEREFOR

(57) The present invention relates to an olefin-based polymer and a method for preparing the same. Specifically, according to an implementation of the present invention, provided are an olefin-based polymer and a method for preparing the same, the olefin-based polymer having excellent heat-sealing property due to the high proportion of a copolymer, which has many branches and is derived from comonomers.

[FIG. 2]

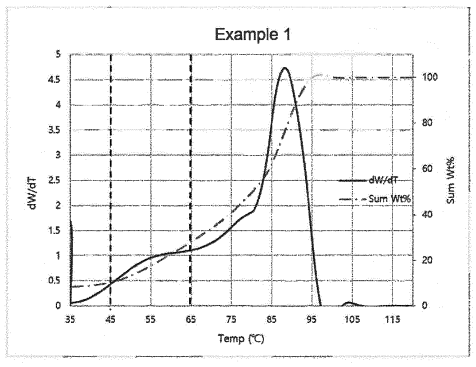


EP 4 265 654 A1

## Description

[Technical Field]

The present invention relates to an olefin-based polymer and a method for preparing the same. Specifically, the present invention relates to an olefin-based polymer having excellent heat-sealing property and a method for preparing the same.

[Background Art]

A metallocene catalyst which is one of the catalysts used in olefin polymerization, which is a compound in which a ligand such as cyclopentadienyl, indenyl, or cycloheptadienyl is coordinated to a transition metal or a transition metal halogen compound, has a sandwich structure as a basic form.
A Ziegler-Natta catalyst which is another catalyst used for polymerizing olefins has heterogeneous properties of an active site, since a metal component as an active site is dispersed on an inert solid surface; however, the metallocene catalyst is known as a single-site catalyst having identical polymerization properties in all active sites, since it is one compound having a certain structure. A polymer polymerized with the metallocene catalyst as such has a narrow molecular weight distribution, a uniform comonomer distribution, and copolymerization activity higher than the Ziegler Natta catalyst.
Meanwhile, a linear low-density polyethylene (LLDPE) is prepared by copolymerizing ethylene and $\alpha$-olefin at a low pressure using a polymerization catalyst, has a narrow molecular weight distribution and a short chain branch (SCB) having a certain length, and does not have a long chain branch (LCB) in general. A film prepared with a linear low-density polyethylene has high breaking strength and elongation, and excellent tear strength, impact strength, and the like, together with general properties of polyethylene, and thus, is widely used in a stretch film, an overlap film, and the like to which it is conventionally difficult to apply low-density polyethylene or high-density polyethylene.
However, the linear low-density polyethylene prepared by a metallocene catalyst has poor processability due to a narrow molecular weight distribution, and a film prepared therefrom tends to have lowered heat seal properties.
Therefore, an olefin-based polymer having excellent heat-sealing property is being demanded.

[**Disclosure**]

[Technical Problem]

An object of the present invention is to provide an olefin-based polymer having excellent heat-sealing property.
Another object of the present invention is to provide a method for preparing the olefin-based polymer.

[Technical Solution]

In one general aspect, an olefin-based polymer which has (1) a density of 0.915 to 0.950 g/cm$^3$; (2) a melt index ($I_{2.16}$) of 0.5 to 1.5 g/10 min as measured with a load of 2.16 kg at 190°C; and (3) a polydispersity index (Mw/Mn) of 2 to 6; and (4) satisfies the following Relation 1 in temperature rising elution fractionation (TREF) of a multimodal distribution is provided:

[Relation 1] $C_{65} - C_{45} > 15$ (%)

wherein $C_{45}$ is a weight% of a polymer eluted at 45°C, and $C_{65}$ is a weight% of a polymer eluted at 65°C.
In a specific example of the present invention, the olefin-based polymer may be prepared by polymerizing an olefin-based monomer in the presence of a hybrid catalyst including: at least one first transition metal compound represented by the following Chemical Formula 1; and at least one second transition metal compound selected from a compound represented by the following Chemical Formula 2 and a compound represented by the following Chemical Formula 3:

[Chemical Formula 1]

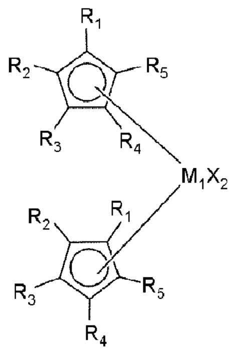

[Chemical Formula 2]

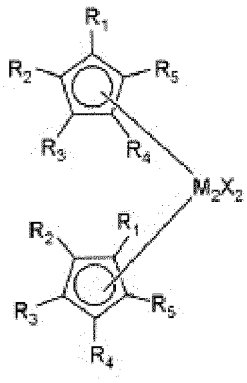

[Chemical Formula 3]

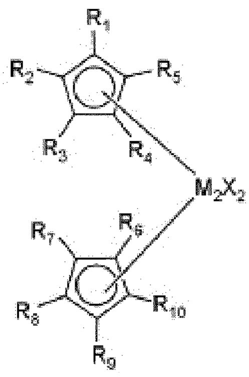

wherein $M_1$ and $M_2$ are different from each other and independently of each other titanium (Ti), zirconium (Zr), or hafnium (Hf),

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido, and

$R_1$ to $R_{10}$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, but $R_1$ to $R_{10}$ may be independently of each other connected to an adjacent group to form a substituted or unsubstituted and saturated or unsaturated $C_{4-20}$ ring.

In a specific example of the present invention, $M_1$ and $M_2$ may be different from each other and zirconium or

hafnium, respectively, X may be halogen or $C_{1-20}$ alkyl, and $R_1$ to $R_{10}$ may be independently of each other hydrogen, substituted or unsubstituted $C_{1-20}$ alkyl, substituted or unsubstituted $C_{1-20}$ alkenyl, or substituted or unsubstituted $C_{6-20}$ aryl.

In a preferred specific example of the present invention, $M_1$ may be hafnium, $M_2$ may be zirconium, and X may be chlorine or methyl.

In a preferred specific example of the present invention, the first transition metal compound may be at least one of transition metal compounds represented by the following Chemical Formulae 1-1 and 1-2, and the second transition metal compound may be at least one of transition metal compounds represented by the following Chemical Formulae 2-1, 2-2, and 3-1:

[Chemical Formula 1-1] [Chemical Formula 1-2]

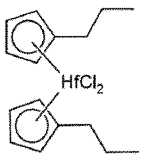

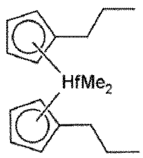

[Chemical Formula 2-1] [Chemical Formula 2-2]

[Chemical Formula 3-1]

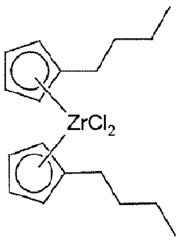

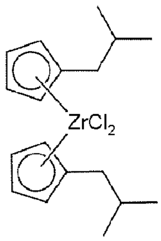

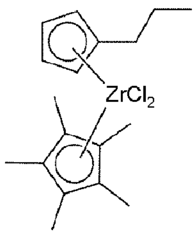

wherein Me is a methyl group.

In a specific example of the present invention, a mole ratio of the first transition metal compound to the second transition metal compound is in a range of 100:1 to 1:100.

In a specific example of the present invention, the catalyst may include at least one cocatalyst selected from the group consisting of a compound represented by the following Chemical Formula 4, a compound represented by the following Chemical Formula 5, and a compound represented by the following Chemical Formula 6:

[Chemical Formula 4]

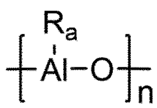

[Chemical Formula 5]

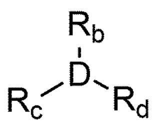

[Chemical Formula 6] $[L-H]^+[Z(A)_4]^-$ or $[L]^+[Z(A)_4]^-$

wherein n is an integer of 2 or more, $R_a$ is a halogen atom, a $C_{1-20}$ hydrocarbon group, or a $C_{1-20}$ hydrocarbon group substituted with halogen,

D is aluminum (Al) or boron (B), $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group,

L is a neutral or cationic Lewis base, $[L-H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group.

In a specific example of the present invention, the catalyst may further include a carrier which supports a transition metal compound, a cocatalyst compound, or both of them.

In a preferred specific example of the present invention, the carrier may include at least one selected from the group consisting of silica, alumina, and magnesia.

Herein, a total amount of the hybrid transition metal compound supported on the carrier may be 0.001 to 1 mmol based on 1 g of the carrier, and a total amount of the cocatalyst compound supported on the carrier may be 2 to 15 mmol based on 1 g of the carrier.

In a specific example of the present invention, the olefin-based polymer may be a copolymer of an olefin-based monomer and an olefin-based comonomer. Specifically, the olefin-based monomer may be ethylene, and the olefin-based comonomer may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Preferably, the olefin-based polymer may be a linear low-density polyethylene in which the olefin-based polymer is ethylene and the olefin-based monomer is 1-hexene.

In another general aspect, a method for preparing an olefin-based polymer includes: polymerizing an olefin-based monomer in the presence of a hybrid catalyst including: at least one first transition metal compound represented by Chemical Formula 1; and at least one second transition metal compound selected from a compound represented by Chemical Formula 2 and a compound represented by Chemical Formula 3, thereby obtaining an olefin-based polymer, wherein the olefin-based polymer has (1) a density of 0.915 to 0.950 g/cm$^3$; (2) a melt index ($I_{2.16}$) of 0.5 to 1.5 g/10 min as measured with a load of 2.16 kg at 190°C; and (3) a polydispersity index (Mw/Mn) of 2 to 6; and (4) satisfies the following Relation 1 in temperature rising elution fractionation (TREF) of a multimodal distribution:

[Relation 1]

$$C_{65} - C_{45} > 15(\%)$$

wherein $C_{45}$ is a weight% of a polymer eluted at 45°C, and $C_{65}$ is a weight% of a polymer eluted at 65°C.

In a specific example of the present invention, polymerization of the olefin-based monomer may be performed by gas phase polymerization, and specifically, the polymerization of the olefin-based monomer may be performed in a gas phase fluidized bed reactor.

[Advantageous Effects]

The olefin-based polymer according to an exemplary embodiment of the present invention has a high proportion of a highly branched copolymer derived from a comonomer, and thus, has excellent heat-sealing property.

[Description of Drawings]

FIG. 1 is a temperature rising elution fractionation (TREF) graph for describing Relation 1.

FIGS. 2 to 4 are temperature rising elution fractionation (TREF) graphs of olefin-based polymers of Examples 1 to 3, respectively.

FIGS. 5 and 6 are temperature rising elution fractionation (TREF) graphs of olefin-based polymers of Comparative Examples 1 and 2, respectively.

[Best Mode]

Hereinafter, the present invention will be described in more detail.

**Olefin-based polymer**

According to an exemplary embodiment of the present invention, an olefin-based polymer which has (1) a density of 0.915 to 0.950 g/cm$^3$; (2) a melt index ($I_{2.16}$) of 0.5 to 1.5 g/10 min as measured with a load of 2.16 kg at 190°C; and (3) a polydispersity index (Mw/Mn) of 2 to 6; and (4) satisfies the following Relation 1 in temperature rising elution fractionation (TREF) of a multimodal distribution is provided:

[Relation 1]

$$C_{65} - C_{45} > 15(\%)$$

wherein $C_{45}$ is a weight% of a polymer eluted at 45°C, and $C_{65}$ is a weight% of a polymer eluted at 65°C.

In a specific example of the present invention, the olefin-based polymer has the density of 0.915 to 0.950 g/cm$^3$. Preferably, the olefin-based polymer may have the density of 0.915 to 0.940 g/cm$^3$.

In a specific example of the present invention, the olefin-based polymer may have the melt index ($I_{2.16}$) of 0.5 to 1.5 g/10 min as measured with a load of 2.16 kg at 190°C. Preferably, the olefin-based polymer may have the melt index of 0.6 to 1.2 g/10 min as measured with a load of 2.16 kg at 190°C.

In a specific example of the present invention, the olefin-based polymer may have the polydispersity index (Mw/Mn) of 2 to 6. Preferably, the olefin-based polymer may have the polydispersity index of 4 to 6.

In a specific example of the present invention, the olefin-based polymer may have a value of $C_{65}$ - $C_{45}$ of Relation 1 of more than 15 (%) in the temperature rising elution fractionation of a multimodal distribution.

In the TREF curve of the multimodal distribution, an area of a TREF peak positioned between 45 and 65°C refers to an amount of a highly branched copolymer derived from a comonomer, and as the proportion is high, a polymer having high heat-sealing property may be obtained.

The olefin-based polymer according to an exemplary embodiment of the present invention is prepared by polymerizing an olefin-based monomer in the presence of a hybrid catalyst including: at least one first transition metal compound represented by the following Chemical Formula 1; and at least one second transition metal compound selected from a compound represented by the following Chemical Formula 2 and a compound represented by the following Chemical Formula 3:

[Chemical Formula 1]

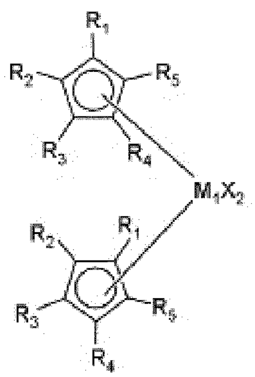

[Chemical Formula 2]

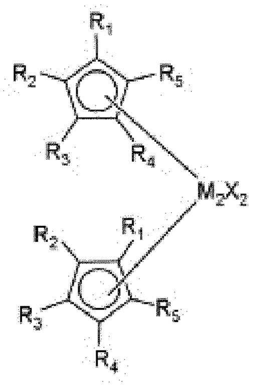

[Chemical Formula 3]

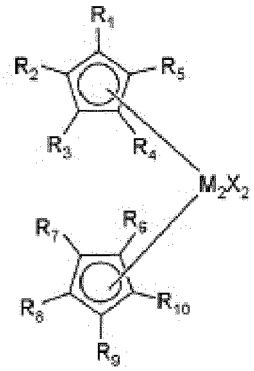

wherein $M_1$ and $M_2$ are different from each other and independently of each other titanium (Ti), zirconium (Zr), or hafnium (Hf), specifically, $M_1$ and $M_2$ may be different from each other and zirconium or hafnium, respectively, and preferably, $M_1$ may be hafnium and $M_2$ may be zirconium,

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido, specifically, X may be halogen or $C_{1-20}$ alkyl, respectively, and preferably, X may be chlorine or methyl, and

$R_1$ to $R_{10}$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, in which $R_1$ to $R_{10}$ may be independently of each other connected to an adjacent group to form a substituted or unsubstituted and saturated or unsaturated $C_{4-20}$ ring, and specifically, $R_1$ to $R_{10}$ may be hydrogen, substituted or unsubstituted $C_{1-20}$ alkyl, substituted or unsubstituted $C_{1-20}$ alkenyl, or substituted or unsubstituted $C_{6-20}$ aryl, respectively.

In a specific example of the present invention, $M_1$ and $M_2$ may be different from each other and zirconium or hafnium, respectively, X may be halogen or $C_{1-20}$ alkyl, and $R_1$ to $R_{10}$ may be independently of each other hydrogen, substituted or unsubstituted $C_{1-20}$ alkyl, substituted or unsubstituted $C_{1-20}$ alkenyl, or substituted or unsubstituted $C_{6-20}$ aryl.

In a preferred specific example of the present invention, $M_1$ may be hafnium, $M_2$ may be zirconium, and X may be chlorine or methyl.

In a preferred specific example of the present invention, the first transition metal compound may be at least one of transition metal compounds represented by the following Chemical Formulae 1-1 and 1-2, and the second transition metal compound may be at least one of transition metal compounds represented by the following Chemical Formulae 2-1, 2-2, and 3-1:

[Chemical Formula 1-1] [Chemical Formula 1-2]

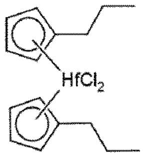 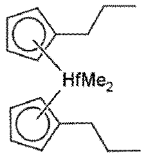

[Chemical Formula 2-1] [Chemical Formula 2-2]

[Chemical Formula 3-1]

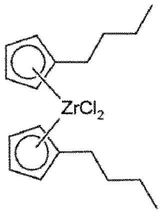 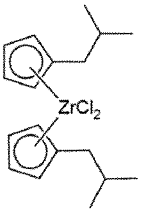 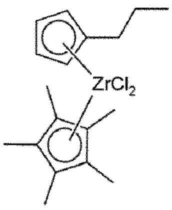

wherein Me is a methyl group.

In a specific example of the present invention, a mole ratio of the first transition metal compound to the second transition metal compound is in a range of 100:1 to 1:100. Preferably, a mole ratio of the first transition metal compound to the second transition metal compound is in a range of 50:1 to 1:50. Preferably, a mole ratio of the first transition metal compound to the second transition metal compound is in a range of 10:1 to 1:10.

In a specific example of the present invention, the catalyst may include at least one cocatalyst compound selected from the group consisting of a compound represented by the following Chemical Formula 4, a compound represented by the following Chemical Formula 5, and a compound represented by the following Chemical Formula 6:

[Chemical Formula 4]

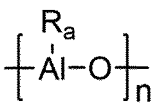

wherein n is an integer of 2 or more, $R_a$ is a halogen atom, $C_{1-20}$ hydrocarbon, or $C_{1-20}$ hydrocarbon substituted with halogen, and specifically, $R_a$ may be methyl, ethyl, n-butyl, or isobutyl,

[Chemical Formula 5]

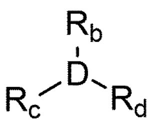

wherein D is aluminum (Al) or boron (B), and $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group, and specifically, when D is aluminum (Al), $R_b$, $R_c$, and $R_d$ may be independently of one another methyl or isobutyl, and when D is boron (B), $R_b$, $R_c$, and $R_d$ may be pentafluorophenyl, respectively,

[Chemical Formula 6] $[L\text{-}H]^+[Z(A)_4]^-$ or $[L]^+[Z(A)_4]^-$

wherein L is a neutral or cationic Lewis base, $[L\text{-}H]^+$ and $[L]^+$ are a Bronsted acid, Z is a group 13 element, and A is

independently of each other a substituted or unsubstituted $C_{6-20}$ aryl group or a substituted or unsubstituted $C_{1-20}$ alkyl group, and specifically, $[L-H]^+$ may be dimethylanilinium cation, $[Z(A)_4]^-$ may be $[B(C_6F_5)_4]^-$, and $[L]^+$ may be $[(C_6H_5)_3C]^+$.

Specifically, an example of the compound represented by Chemical Formula 4 includes methylaluminoxane, ethylaluminoxane, isobutylaluminoxane, butylaluminoxane, and the like, and is preferably methylaluminoxane, but is not limited thereto.

An example of the compound represented by Chemical Formula 5 includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 6 includes triethylammoniumtetraphenylboron, tributylammoniumtetraphenylboron, trimethylammoniumtetraphenylboron, tripropylammoniumtetraphenylboron, trimethylammoniumtetra(p-tolyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(*p*-tolyl)aluminum, tripropylammoniumtetra(*p*-tolyl)aluminum, triethylammoniumtetra(*o,p*-dimethylphenyl)aluminum, tributylammoniumtetra(*p*-trifluoromethylphenyl)aluminum, trimethylammoniumtetra(*p*-trifluoromethylphenyl)aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentatetraphenylaluminum, triphenylphosphoniumtetraphenylaluminum, trimethylphosphoniumtetraphenylaluminum, tripropylammoniumtetra(*p*-tolyl)boron, triethylammoniumtetra(*o*,*p*-dimethylphenyl)boron, tributylammoniumtetra(*p*-trifluoromethylphenyl)boron, triphenylcarboniumtetra(*p*-trifluoromethylphenyl)boron, triphenylcarboniumtetrapentafluorophenylboron, and the like.

In a specific example of the present invention, the catalyst may further include a carrier which supports a transition metal compound, a cocatalyst compound, or both of them. Specifically, the carrier may support both the transition metal compound and the cocatalyst compound.

Herein, the carrier may include a material containing a hydroxyl group on the surface, and preferably, may use a material having highly reactive hydroxyl group and siloxane group which is dried to remove moisture from the surface. For example, the carrier may include at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as $Na_2O$, $K_2CO_3$, $BaSO_4$, and $Mg(NO_3)_2$. In addition, these may include carbon, zeolite, magnesium chloride, and the like. However, the carrier is not limited thereto, and is not particularly limited as long as it may support a transition metal compound and a cocatalyst compound.

The carrier may have an average particle size of 10 to 250 um, preferably 10 to 150 $\mu$m, and more preferably 20 to 100 $\mu$m.

The carrier may have a micropore volume of 0.1 to 10 cc/g, preferably 0.5 to 5 cc/g, and more preferably 1.0 to 3.0 cc/g.

The carrier may have a specific surface area of 1 to 1,000 $m^2$/g, preferably 100 to 800 $m^2$/g, and more preferably 200 to 600 $m^2$/g.

In a preferred specific example of the present invention, the carrier may be silica. Herein, a drying temperature of the silica may be 200 to 900°C. The drying temperature may be 300 to 800°C, and more preferably 400 to 700°C. When the drying temperature is lower than 200°C, silica has too much moisture so that the moisture on the surface reacts with the cocatalyst compound, and when the drying temperature is higher than 900°C, the structure of the carrier may collapse.

A concentration of a hydroxyl group in dried silica may be 0.1 to 5 mmol/g, preferably 0.7 to 4 mmol/g, and more preferably 1.0 to 2 mmol/g. When the concentration of the hydroxyl group is less than 0.1 mmol/g, the supported amount of a first cocatalyst compound is lowered, and when the concentration is more than 5 mmol/g, the catalyst component becomes inactive.

The total amount of the transition metal compound supported on the carrier may be 0.001 to 1 mmol based on 1 g of the carrier. When a ratio between the transition metal compound and the carrier satisfies the above range, appropriate supported catalyst activity is shown, which is advantageous in terms of the activity maintenance of a catalyst and economic feasibility.

The total amount of the cocatalyst compound supported on the carrier may be 2 to 15 mmol based on 1 g of the carrier. When the ratio of the cocatalyst compound and the carrier satisfies the above range, it is advantageous in

terms of the activity maintenance of a catalyst and economic feasibility.

The carrier may be one or two or more. For example, both the transition metal compound and the cocatalyst compound may be supported on one carrier, or each of the transition metal compound and the cocatalyst compound may be supported on two or more carriers. In addition, only one of the transition metal compound and the cocatalyst compound may be supported on the carrier.

As a method for supporting the transition metal compound and/or the cocatalyst compound which may be used in the catalyst for olefin polymerization, a physical adsorption method or a chemical adsorption method may be used.

For example, the physical adsorption method may be a method including bringing a solution in which a transition metal compound is dissolved into contact with a carrier and then drying, a method including bringing a solution in which a transition metal compound and a cocatalyst compound are dissolved into contact with a carrier and then drying, a method including bringing a solution in which a transition metal compound is dissolved into contact with a carrier and then drying to prepare a carrier on which the transition metal compound is supported, separately bringing a solution in which a cocatalyst compound is dissolved into contact with a carrier and then drying to prepare a carrier on which the cocatalyst compound is supported, and then mixing them, or the like.

The chemical adsorption method may be a method including first supporting a cocatalyst compound on the surface of a carrier and then supporting a transition metal compound on the cocatalyst compound, a method including binding a functional group (for example, a hydroxyl group (-OH) on the surface of silica, in the case of silica) on the surface of a carrier and a catalyst compound covalently.

In a specific example of the present invention, the olefin-based polymer may be a homopolymer of an olefin-based monomer or a copolymer of olefin-based monomer and comonomer. Preferably, the olefin-based polymer is a copolymer of an olefin-based monomer and an olefin-based comonomer.

Herein, the olefin-based monomer may be at least one selected from the group consisting of $C_{2-20}$ $\alpha$-olefin, $C_{1-20}$ diolefin, $C_{3-20}$ cycloolefin, and $C_{3-20}$ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, or 1-hexadecene, and the olefin-based polymer may be a homopolymer including only one olefin-based monomer exemplified above or a copolymer including two or more of the olefin-based monomers.

In an exemplary embodiment, the olefin-based polymer may be a copolymer of ethylene and $C_{3-20}$ $\alpha$-olefin. Preferably, the olefin-based polymer may be a linear low-density polyethylene in which the olefin-based monomer is ethylene and the olefin-based comonomer is 1-hexene.

In this case, the content of ethylene is preferably 55 to 99.9 wt%, and more preferably 90 to 99.9 wt%. The content of the $\alpha$-olefin-based comonomer is preferably 0.1 to 45 wt%, and more preferably 0.1 to 10 wt%.

**Method for preparing olefin-based polymer**

According to an exemplary embodiment of the present invention, a method for preparing an olefin-based polymer including: polymerizing an olefin-based monomer in the presence of a hybrid catalyst including: at least one first transition metal compound represented by the following Chemical Formula 1; and at least one second transition metal compound selected from a compound represented by the following Chemical Formula 2 and a compound represented by the following Chemical Formula 3, thereby obtaining an olefin-based polymer, is provided:

[Chemical Formula 1]

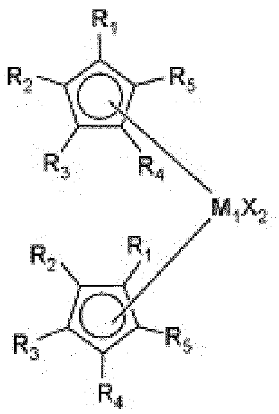

[Chemical Formula 2]

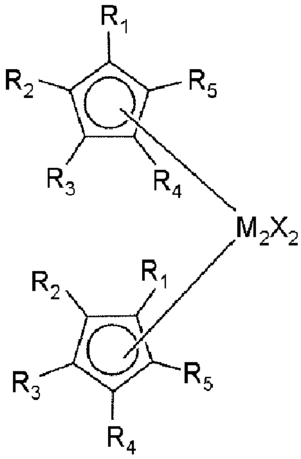

[Chemical Formula 3]

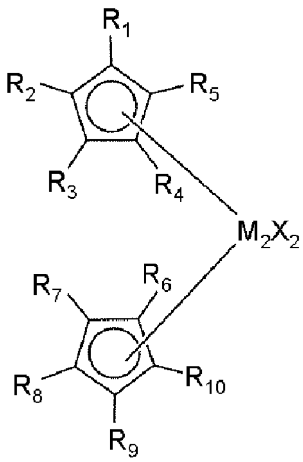

wherein $M_1$, $M_2$, X, and $R_1$ to $R_{10}$ are as defined above in the item of "olefin-based polymer".

As described above, the olefin-based polymer prepared by the preparation method according to an exemplary embodiment of the present invention has (1) a density of 0.915 to 0.950 g/cm$^3$; (2) a melt index ($I_{2.16}$) of 0.5 to 1.5 g/10 min as measured with a load of 2.16 kg at 190°C; and (3) a polydispersity index (Mw/Mn) of 2 to 5; and (4) satisfies the following Relation 1 in temperature rising elution fractionation (TREF) of a multimodal distribution:

[Relation 1]

$$C_{65} - C_{45} > 15(\%)$$

wherein $C_{45}$ is a weight% of a polymer eluted at 45°C, and $C_{65}$ is a weight% of a polymer eluted at 65°C.

In a specific example of the present invention, the olefin-based polymer may be polymerized by a polymerization reaction such as free radical, cationic, coordination, condensation, and addition polymerization, but is not limited thereto.

In an exemplary embodiment of the present invention, the olefin-based polymer may be prepared by a gas phase polymerization method, a solution polymerization method, a slurry polymerization method, or the like. Preferably, the polymerization of the olefin-based monomer may be performed by gas phase polymerization, and specifically, the polymerization of the olefin-based monomer may be performed in a gas phase fluidized bed reactor.

When the olefin-based polymer is prepared by a solution polymerization method or a slurry polymerization method, an example of the solvent to be used may include a $C_{5-12}$ aliphatic hydrocarbon solvent such as pentane,

hexane, heptane, nonane, decane, and isomers thereof; an aromatic hydrocarbon solvent such as toluene and benzene; a hydrocarbon solvent substituted with a chlorine atom such as dichloromethane and chlorobenzene; and a mixture thereof, but is not limited thereto.

[Best Mode for Carrying Out the Invention]

**Examples**

Hereinafter, the present invention will be described in more detail through the following examples. However, the following examples are only illustrative of the present invention, and do not limit the scope of the present invention.

Preparation Example

The transition metal compound of Chemical Formula 1-2 (dimethylbis(n-propylcyclopentadienyl) hafnium dichloride) and the transition metal compound of Chemical Formula 3-1 ((pentamethylcyclopentadienyl)(n-propylcyclopentadienyl) zirconium dichloride) were purchased from MCN, and used without further purification.

892 g of a 10% toluene solution of methylaluminoxane was added to 4.07 g of the transition metal compound of Chemical Formula 1-2 and 1.68 g of the transition metal compound of Chemical Formula 3-1, and the solution was stirred at room temperature for 1 hour. The resulting solution after the reaction was added to 200 g of silica (XPO-2402), 1.5 L of toluene was further added, and stirring was performed at 70°C for 2 hours. The resulting catalyst after the support was washed with 500 mL of toluene, and was dried overnight at 60°C under vacuum to obtain 280 g of a supported catalyst in a powder form.

Examples 1 to 3

Ethylene/1-hexene copolymers were prepared, respectively, in the presence of the supported catalyst, which was obtained in the preparation example, using a gas phase fluidized bed reactor. The ethylene partial pressure of the reactor was maintained at about 15 kg/cm$^2$, and the polymerization temperature was maintained at 70 to 90°C.

The polymerization conditions of the examples are shown in the following Table 1.

[Table 1]

| | Example 1 | Example 2 | Example 3 |
|---|---|---|---|
| Polymerization temperature (°C) | 74.8 | 80.4 | 83.6 |
| Catalyst injection amount (g/h) | 1.97 | 1.31 | 1.35 |
| Hydrogen injection amount (g/h) | 2.28 | 2.13 | 2.15 |
| 1-Hexene injection amount (kg/h) | 1.53 | 1.54 | 1.77 |
| Hydrogen/ethylene concentration (%) ratio | 0.045 | 0.049 | 0.047 |
| 1-Hexene/ethylene concentration (%) ratio | 1.45 | 1.39 | 1.44 |
| Production amount per hour (kg/h) | 6.91 | 6.22 | 6.52 |

Comparative Examples 1 and 2

For comparison, linear low-density polyethylenes available from Hanwha Solutions, M1810HN (Comparative Example 1) and M2010EN (Comparative Example 2) were used.

Test Example

The physical properties of the olefin-based polymer of the above examples were measured by the following methods and criteria. The results are shown in Table 2.

(1) Density

Measured according to ASTM D 1505.

(2) Melt index and melt index ratio (MFR)

The melt index was measured with a load of 21.6 kg and a load of 2.16 kg, respectively, at 190°C in accordance with ASTM D1238, and the ratio ($MI_{21.6}/MI_{2.16}$) was calculated.

(3) Polydispersity index

A weight average molecular weight (Mw) and a number average molecular weight (Mn) were measured with gel permeation chromatography (GPC) and the polydispersity index was determined by the ratio.

(4) TREF

A difference between a weight% value when the temperature was 65°C and a weight% value when the temperature was 45°C in a TREF graph showing an eluted cumulative weight percentage (sum wt%) depending on temperature using cross-fractionation chromatography (CFC) equipment was used.

[Table 2]

| | Unit | Example 1 | Example 2 | Example 3 | Comparative Example 1 | Comparative Example 2 |
|---|---|---|---|---|---|---|
| $MI_{2.16}$ | g/10 min | 1.11 | 0.87 | 0.99 | 1.02 | 1.04 |
| $MI_{21.16}$ | g/10 min | 27.8 | 18.4 | 20.8 | 16.23 | 33.25 |
| MFR | - | 25 | 21.2 | 21.0 | 15.9 | 35.9 |
| Density | $g/cm^3$ | 0.9210 | 0.9174 | 0.9197 | 0.9179 | 0.9186 |
| Polydispersity index | - | 4.65 | 4.74 | 5.29 | 4.1 | 5.7 |
| $C_{65}$ - $C_{45}$ | % | 17.69 | 15.19 | 19.64 | 9.28 | 9.30 |

[Industrial Applicability]

As confirmed from Table 2 and FIGS. 1 to 3, since the olefin-based polymer according to the specific example of the present invention has a high proportion of a highly branched copolymer derived from a comonomer, it has excellent heat-sealing property.

## Claims

1. An olefin-based polymer which has (1) a density of 0.915 to 0.950 $g/cm^3$; (2) a melt index ($I_{2.16}$) of 0.5 to 1.5 g/10 min as measured with a load of 2.16 kg at 190°C; and (3) a polydispersity index (Mw/Mn) of 2 to 6; and (4) satisfies the following Relation 1 in temperature rising elution fractionation (TREF) of a multimodal distribution:

[Relation 1]

$$C_{65} - C_{45} > 15(\%)$$

wherein $C_{45}$ is a weight% of a polymer eluted at 45°C, and $C_{65}$ is a weight% of a polymer eluted at 65°C.

2. The olefin-based polymer of claim 1, wherein the olefin-based polymer has (1) the density of 0.915 to 0.940 $g/cm^3$;

(2) the melt index of 0.5 to 1.5 g/10 min as measured with a load of 2.16 kg at 190°C; and (3) the polydispersity index of 4 to 6.

3. The olefin-based polymer of claim 1, wherein the olefin-based polymer is prepared by polymerizing an olefin-based monomer in the presence of a hybrid catalyst comprising: at least one first transition metal compound represented by the following Chemical Formula 1; and at least one second transition metal compound selected from a compound represented by the following Chemical Formula 2 and a compound represented by the following Chemical Formula 3:

[Chemical Formula 1]

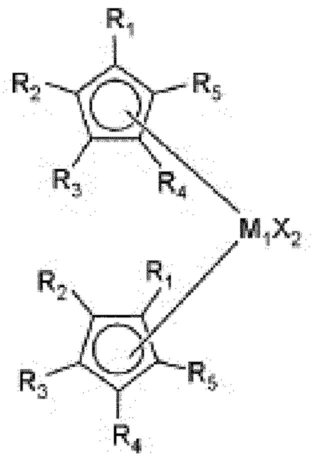

[Chemical Formula 2]

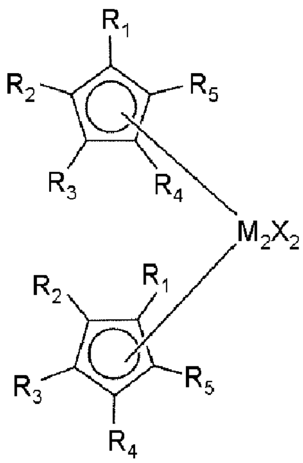

[Chemical Formula 3]

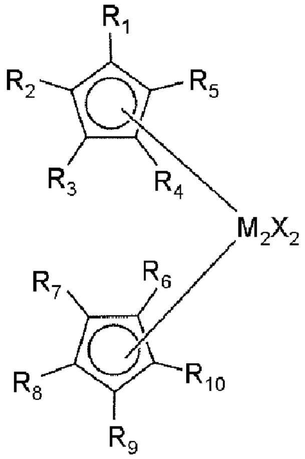

wherein $M_1$ and $M_2$ are different from each other and independently of each other titanium (Ti), zirconium (Zr), or hafnium (Hf),

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido, and

$R_1$ to $R_{10}$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, but $R_1$ to $R_{10}$ may be independently of each other connected to an adjacent group to form a substituted or unsubstituted and saturated or unsaturated $C_{4-20}$ ring.

**4.** The olefin-based polymer of claim 3, wherein $M_1$ and $M_2$ are different from each other and zirconium or hafnium, respectively, X is halogen or $C_{1-20}$ alkyl, respectively, and $R_1$ to $R_{10}$ are hydrogen, or substituted or unsubstituted $C_{1-20}$ alkyl, respectively.

**5.** The olefin-based polymer of claim 4, wherein $M_1$ is hafnium, $M_2$ is zirconium, and X is chlorine or methyl.

**6.** The olefin-based polymer of claim 3, wherein the first transition metal compound is at least one of transition metal compounds represented by the following Chemical Formulae 1-1 and 1-2, and the second transition metal compound is at least one of transition metal compounds represented by the following Chemical Formulae 2-1, 2-2, and 3-1:

[Chemical Formula 1-1] [Chemical Formula 1-2]

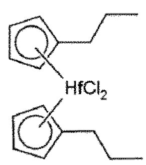

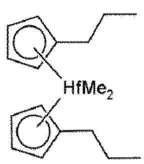

[Chemical Formula 2-1] [Chemical Formula 2-2]

[Chemical Formula 3-1]

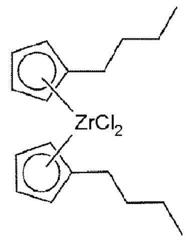 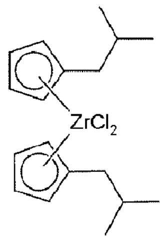 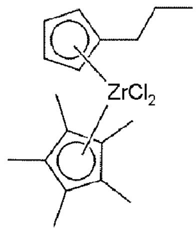

wherein Me is a methyl group.

**7.** The olefin-based polymer of claim 3, wherein a mole ratio of the first transition metal compound to the second transition metal compound is in a range of 100:1 to 1:100.

**8.** The olefin-based polymer of claim 3, wherein the catalyst comprises at least one cocatalyst compound selected from the group consisting of a compound represented by the following Chemical Formula 4, a compound represented by the following Chemical Formula 5, and a compound represented by the following Chemical Formula 6:

[Chemical Formula 4]

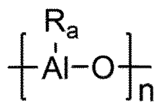

[Chemical Formula 5]

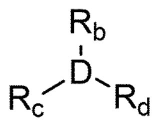

[Chemical Formula 6] $[L^{-}H]^{+}[Z(A)_4]^{-}$ or $[L]^{+}[Z(A)_4]^{-}$

wherein n is an integer of 2 or more, $R_a$ is a halogen atom, a $C_{1-20}$ hydrocarbon group, or a $C_{1-20}$ hydrocarbon group substituted with halogen,

D is aluminum (Al) or boron (B), $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group,
L is a neutral or cationic Lewis base, $[L\text{-}H]^{+}$ and $[L]^{+}$ are a Bronsted acid, Z is a group 13 element, and A is independently of each other a substituted or unsubstituted $C_{6-20}$ aryl group or a substituted or unsubstituted $C_{1-20}$ alkyl group.

**9.** The olefin-based polymer of claim 8, wherein the catalyst further comprises a carrier which supports the transition metal compound, the cocatalyst compound, or both of them.

**10.** The olefin-based polymer of claim 9, wherein the carrier comprises at least one selected from the group consisting of silica, alumina, and magnesia.

**11.** The olefin-based polymer of claim 9, wherein a total amount of the hybrid transition metal compound supported on the carrier is 0.001 to 1 mmol based on 1 g of the carrier, and a total amount of the cocatalyst compound supported on the carrier is 2 to 15 mmol based on 1 g of the carrier.

**12.** The olefin-based polymer of claim 3, wherein the olefin-based polymer is a copolymer of an olefin-based monomer and an olefin-based comonomer.

**13.** The olefin-based polymer of claim 12, wherein the olefin-based monomer is ethylene, and the olefin-based comonomer is one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

**14.** The olefin-based polymer of claim 13, wherein the olefin-based polymer is a linear low-density polyethylene in which the olefin-based monomer is ethylene and the olefin-based comonomer is 1-hexene.

**15.** A method for preparing an olefin-based polymer, the method comprising: polymerizing an olefin-based monomer in the presence of a hybrid catalyst comprising: at least one first transition metal compound represented by the following Chemical Formula 1; and at least one second transition metal compound selected from a compound represented by the following Chemical Formula 2 and a compound represented by the following Chemical Formula 3, thereby obtaining an olefin-based polymer, wherein the olefin-based polymer has (1) a density of 0.915 to 0.950 g/cm$^3$; (2) a melt index ($I_{2.16}$) of 0.5 to 1.5 g/10 min as measured with a load of 2.16 kg at 190°C; and (3) a polydispersity index (Mw/Mn) of 2 to 6; and (4) satisfies the following Relation 1 in temperature rising elution fractionation (TREF) of a multimodal distribution:

[Relation 1]

$$C_{65} - C_{45} > 15(\%)$$

[Chemical Formula 1]

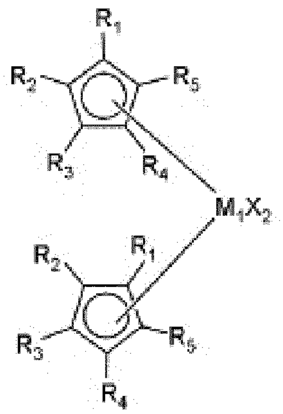

[Chemical Formula 2]

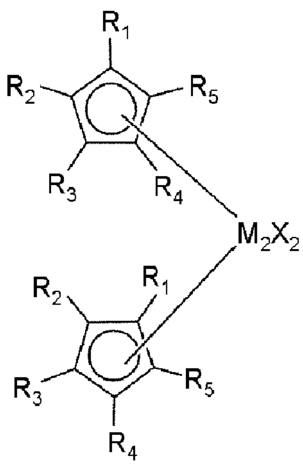

[Chemical Formula 3]

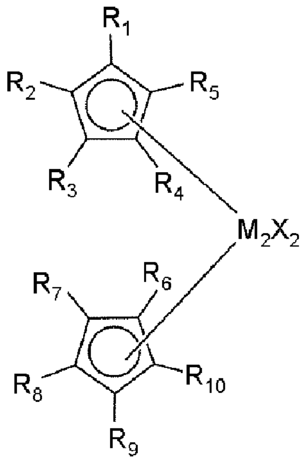

wherein $C_{45}$ and $C_{65}$ are as defined in claim 1, and $M_1$, $M_2$, X, and $R_1$ to $R_{10}$ are as defined in claim 3.

16. The method for preparing an olefin-based polymer of claim 15, wherein the polymerization of the olefin-based monomer is performed by gas phase polymerization.

[FIG. 1]

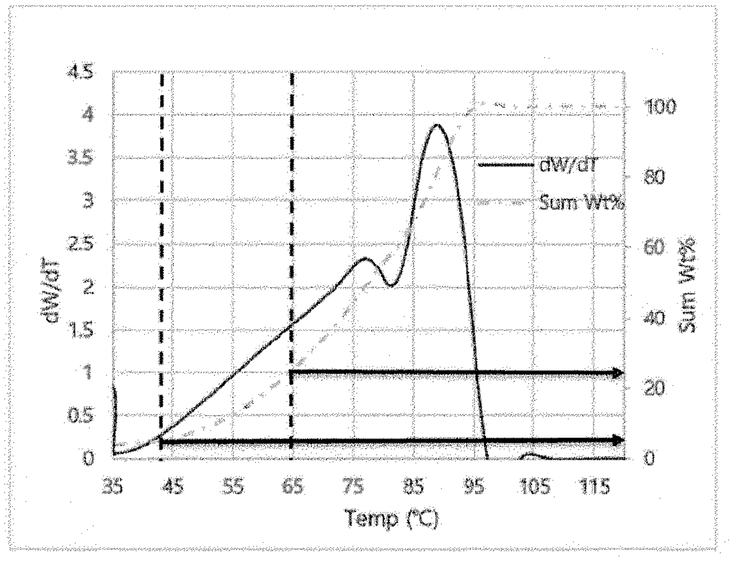
4.5
4
3.5
3
2.5
2
1.5
1
0.5
0
dW/dT
100
80
60
40
20
0
Sum Wt%
dW/dT
Sum Wt%
35
45
55
65
75
85
95
105
115
Temp (℃)

[FIG. 2]

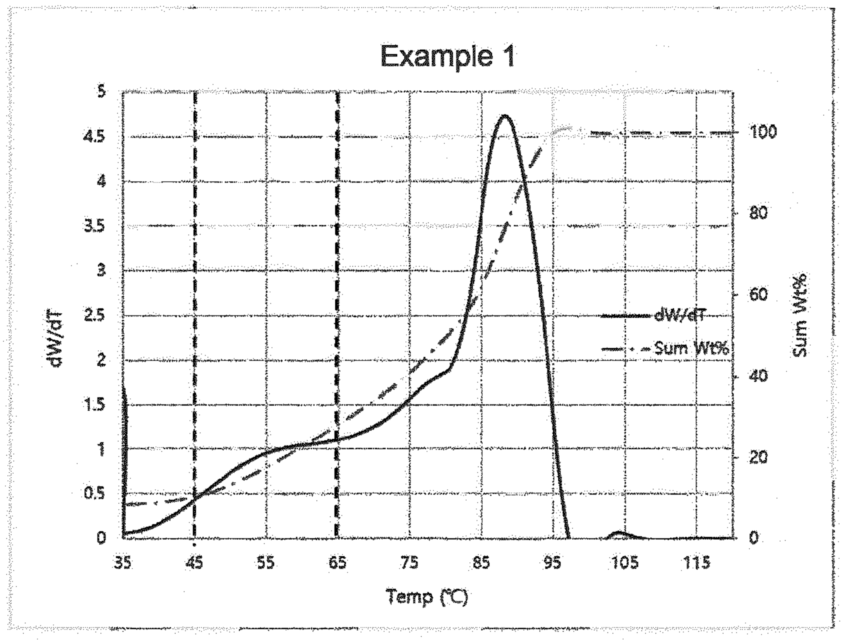
Example 1
5
4.5
4
3.5
3
2.5
2
1.5
1
0.5
0
dW/dT
100
80
60
40
20
0
Sum Wt%
dW/dT
Sum Wt%
35
45
55
65
75
85
95
105
115
Temp (℃)

[FIG. 3]

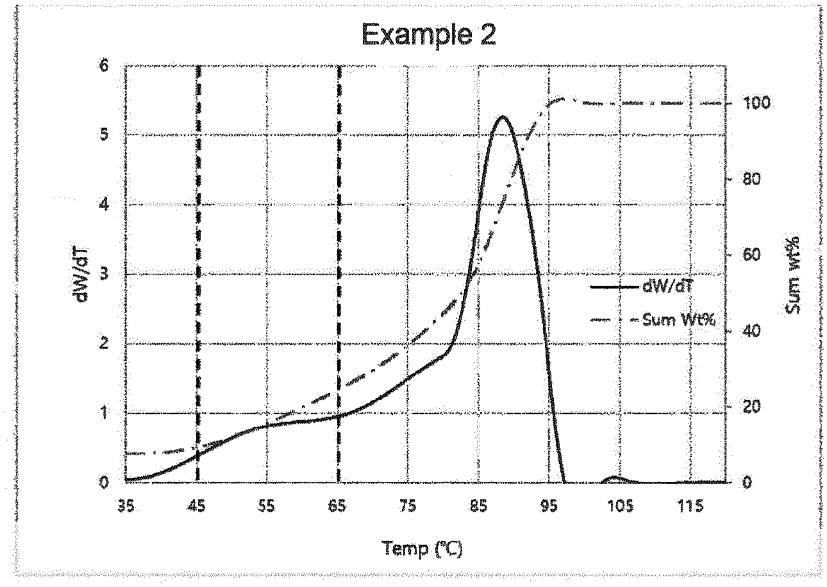
Example 2
6
5
4
3
2
1
0
dW/dT
35
45
55
65
75
85
95
105
115
Temp (℃)
100
80
60
40
20
0
Sum wt%
dW/dT
Sum Wt%

[FIG. 4]

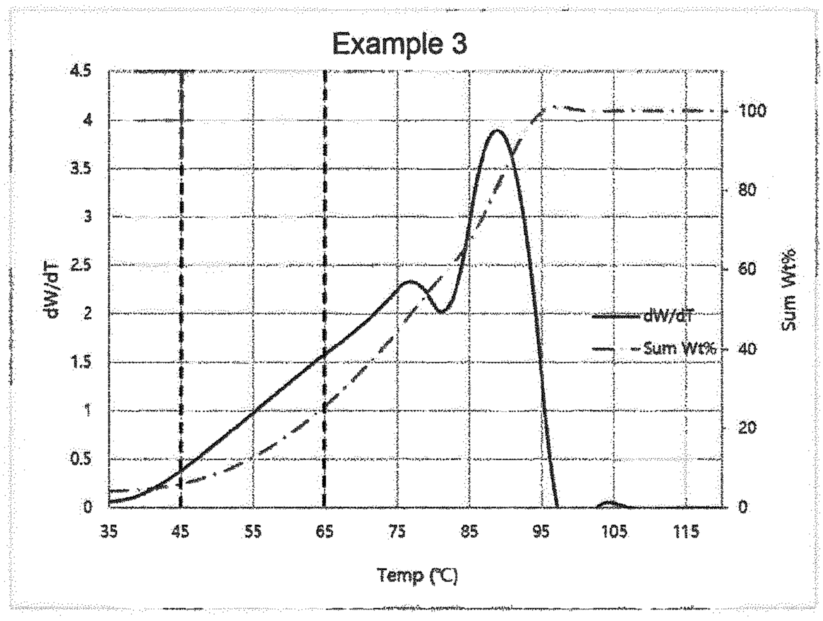
Example 3
4.5
4
3.5
3
2.5
2
1.5
1
0.5
0
dW/dT
35
45
55
65
75
85
95
105
115
Temp (℃)
100
80
60
40
20
0
Sum Wt%
dW/dT
Sum Wt%

[FIG. 5]

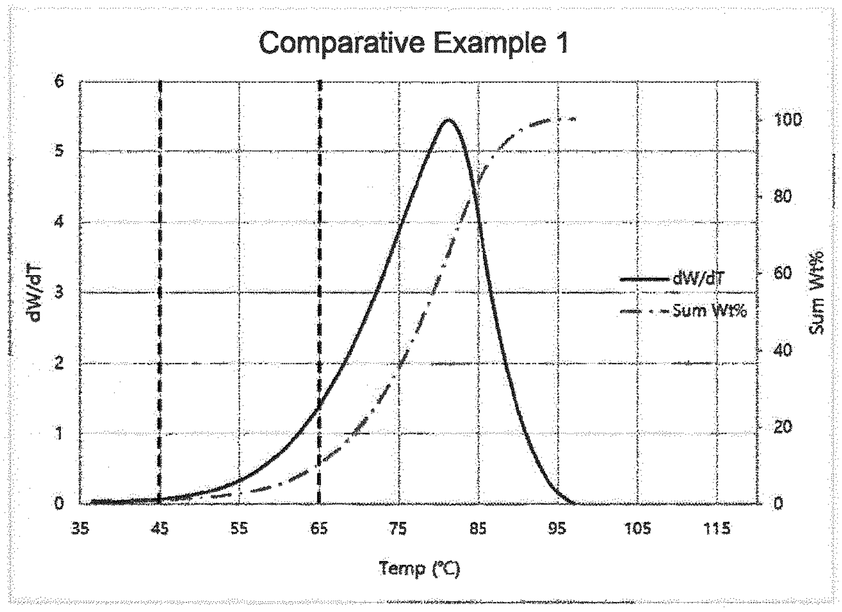
Comparative Example 1
dW/dT
Sum Wt%
Temp (℃)
0
1
2
3
4
5
6
0
20
40
60
80
100
35
45
55
65
75
85
95
105
115

[FIG. 6]

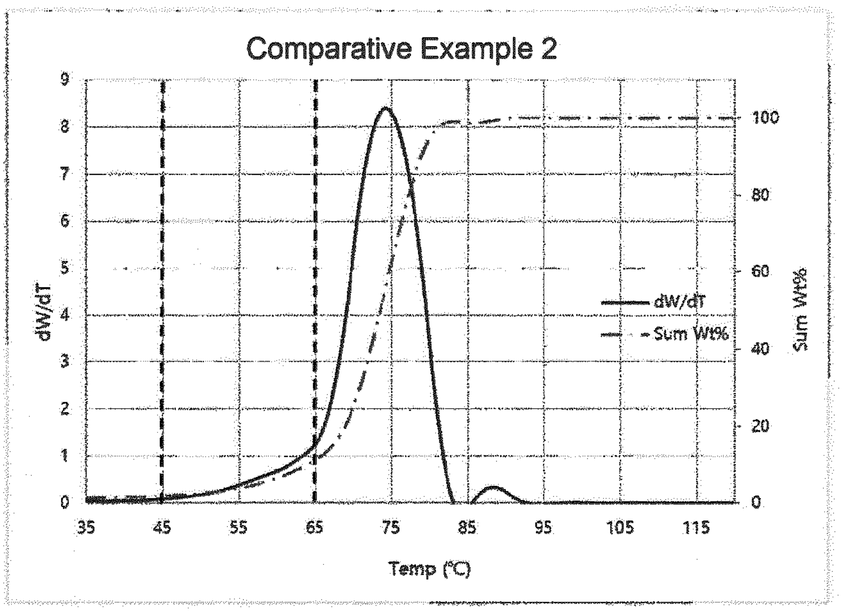
Comparative Example 2
dW/dT
Sum Wt%
Temp (℃)
0
1
2
3
4
5
6
7
8
9
0
20
40
60
80
100
35
45
55
65
75
85
95
105
115

## INTERNATIONAL SEARCH REPORT

International application No.
**PCT/KR2021/018730**

**A. CLASSIFICATION OF SUBJECT MATTER**

**C08F 210/16**(2006.01)i; **C08F 216/14**(2006.01)i; **C08F 4/6592**(2006.01)i; **C08F 4/659**(2006.01)i; **C08F 4/02**(2006.01)i; **C08F 2/34**(2006.01)i

According to International Patent Classification (IPC) or to both national classification and IPC

**B. FIELDS SEARCHED**

Minimum documentation searched (classification system followed by classification symbols)

C08F 210/16(2006.01); C07F 17/00(2006.01); C07F 7/00(2006.01); C08F 10/02(2006.01); C08F 4/64(2006.01); C08F 4/646(2006.01); C08F 4/6592(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus) & keywords: 혼성(hybrid), 담지 촉매(supported catalyst), 전이금속(transition metal), 올레핀(olefin)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-113282 A (KOEI CHEMICAL CO., LTD.) 22 June 2015 (2015-06-22)<br>See paragraphs [0002] and [0042]. | 1-7,15,16<br>8-14 |
| Y | US 2019-0040167 A1 (EXXONMOBIL CHEMICAL PATENTS INC.) 07 February 2019 (2019-02-07)<br>See claims 1, 8, 12 and 18-20; and paragraphs [0030] and [0050]. | 8-14 |
| A | WO 2017-188602 A1 (HANWHA CHEMICAL CORPORATION) 02 November 2017 (2017-11-02)<br>See claims 1-18. | 1-16 |
| A | US 2018-0134828 A1 (EXXONMOBIL CHEMICAL PATENTS INC.) 17 May 2018 (2018-05-17)<br>See entire document. | 1-16 |
| A | KR 10-2007-0098276 A (EXXONMOBIL CHEMICAL PATENTS INC.) 05 October 2007 (2007-10-05)<br>See entire document. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 March 2022** | **31 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/018730**

| Patent document cited in search report | Publication date (day/month/year) | Patent family member(s) | Publication date (day/month/year) |
|---|---|---|---|
| JP 2015-113282 A | 22 June 2015 | None | |
| US 2019-0040167 A1 | 07 February 2019 | CN 111094366 A | 01 May 2020 |
| | | CN 111108130 A | 05 May 2020 |
| | | CN 111212857 A | 29 May 2020 |
| | | CN 111491959 A | 04 August 2020 |
| | | EP 3661975 A1 | 10 June 2020 |
| | | EP 3661975 A4 | 11 November 2020 |
| | | EP 3661981 A1 | 10 June 2020 |
| | | EP 3661984 A1 | 10 June 2020 |
| | | EP 3697822 A1 | 26 August 2020 |
| | | EP 3697822 A4 | 26 August 2020 |
| | | SG 11202000942 A | 27 February 2020 |
| | | SG 11202000989 A | 30 March 2020 |
| | | US 10844150 B2 | 24 November 2020 |
| | | US 10913808 B2 | 09 February 2021 |
| | | US 11046796 B2 | 29 June 2021 |
| | | US 2019-0040168 A1 | 07 February 2019 |
| | | US 2020-0165366 A1 | 28 May 2020 |
| | | US 2020-0231790 A1 | 23 July 2020 |
| | | WO 2019-027585 A1 | 07 February 2019 |
| | | WO 2019-027586 A1 | 07 February 2019 |
| | | WO 2019-027587 A1 | 07 February 2019 |
| | | WO 2019-027605 A1 | 07 February 2019 |
| WO 2017-188602 A1 | 02 November 2017 | CN 109415450 A | 01 March 2019 |
| | | EP 3450467 A1 | 06 March 2019 |
| | | JP 2019-515997 A | 13 June 2019 |
| | | JP 6804559 B2 | 23 December 2020 |
| | | KR 10-1725004 B1 | 18 April 2017 |
| | | US 2019-0263942 A1 | 29 August 2019 |
| US 2018-0134828 A1 | 17 May 2018 | CN 107148446 A | 08 September 2017 |
| | | CN 107148446 B | 16 June 2020 |
| | | CN 107207807 A | 26 September 2017 |
| | | CN 107207807 B | 16 June 2020 |
| | | CN 107250250 A | 13 October 2017 |
| | | CN 107250250 B | 29 December 2020 |
| | | CN 107636028 A | 26 January 2018 |
| | | CN 107636029 A | 26 January 2018 |
| | | CN 107636029 B | 22 May 2020 |
| | | CN 107667123 A | 06 February 2018 |
| | | CN 107667123 B | 01 September 2020 |
| | | CN 109312015 A | 05 February 2019 |
| | | CN 109312015 B | 26 October 2021 |
| | | CN 110845801 A | 28 February 2020 |
| | | EP 3245252 A1 | 22 November 2017 |
| | | EP 3245252 B1 | 13 October 2021 |
| | | EP 3245253 A1 | 22 November 2017 |
| | | EP 3245253 B1 | 04 December 2019 |
| | | EP 3245254 A1 | 22 November 2017 |
| | | EP 3245254 B1 | 03 April 2019 |
| | | EP 3274380 A1 | 31 January 2018 |

Form PCT/ISA/210 (patent family annex) (July 2019)

**INTERNATIONAL SEARCH REPORT**
**Information on patent family members**

International application No.
**PCT/KR2021/018730**

| Patent document cited in search report | Publication date (day/month/year) | Patent family member(s) | Publication date (day/month/year) |
|---|---|---|---|
| | | EP 3274380 B1 | 19 August 2020 |
| | | EP 3274381 A1 | 31 January 2018 |
| | | EP 3274381 B1 | 15 May 2019 |
| | | EP 3286231 A1 | 28 February 2018 |
| | | EP 3286231 B1 | 09 October 2019 |
| | | EP 3452521 A1 | 13 March 2019 |
| | | JP 2018-504512 A | 15 February 2018 |
| | | JP 2018-506619 A | 08 March 2018 |
| | | JP 2018-507928 A | 22 March 2018 |
| | | JP 6509349 B2 | 08 May 2019 |
| | | JP 6689862 B2 | 28 April 2020 |
| | | JP 6788609 B2 | 25 November 2020 |
| | | KR 10-1918882 B1 | 14 November 2018 |
| | | KR 10-1973880 B1 | 29 April 2019 |
| | | KR 10-1989719 B1 | 14 June 2019 |
| | | KR 10-2017-0097126 A | 25 August 2017 |
| | | KR 10-2017-0097696 A | 28 August 2017 |
| | | KR 10-2017-0097697 A | 28 August 2017 |
| | | US 10253173 B2 | 09 April 2019 |
| | | US 10385198 B2 | 20 August 2019 |
| | | US 10457801 B2 | 29 October 2019 |
| | | US 10538656 B2 | 21 January 2020 |
| | | US 10618989 B2 | 14 April 2020 |
| | | US 10640583 B2 | 05 May 2020 |
| | | US 10717790 B2 | 21 July 2020 |
| | | US 2016-0244535 A1 | 25 August 2016 |
| | | US 2017-0362350 A1 | 21 December 2017 |
| | | US 2018-0002516 A1 | 04 January 2018 |
| | | US 2018-0002517 A1 | 04 January 2018 |
| | | US 2018-0072823 A1 | 15 March 2018 |
| | | US 2018-0171040 A1 | 21 June 2018 |
| | | US 2019-169413 A1 | 06 June 2019 |
| | | US 9796795 B2 | 24 October 2017 |
| | | WO 2016-114914 A1 | 21 July 2016 |
| | | WO 2016-114915 A1 | 21 July 2016 |
| | | WO 2016-114916 A1 | 21 July 2016 |
| | | WO 2016-171807 A1 | 27 October 2016 |
| | | WO 2016-171808 A1 | 27 October 2016 |
| | | WO 2016-172099 A1 | 27 October 2016 |
| | | WO 2017-192226 A1 | 09 November 2017 |
| KR 10-2007-0098276 A | 05 October 2007 | KR 10-0886681 B1 | 04 March 2009 |

Form PCT/ISA/210 (patent family annex) (July 2019)